# EUROPEAN PATENT APPLICATION

(11) **EP 4 726 371 A1**
(43) Date of publication of application: **15.04.2026**
(21) Application number: 24823003.9
(22) Date of filing: 10.01.2024
(51) Int. Cl.: G01N 21/84, G01B 21/20, G01N 27/9013, G01N 29/04, G01N 29/265

(54) **INSPECTION ASSISTANCE DEVICE AND INSPECTION ASSISTANCE METHOD**

(30) Priority: 12.06.2023 JP 2023096394
(71) Applicant: Hitachi, Ltd., Tokyo 100-8280 (JP)
(72) Inventor: WATANABE, Masahiro, Tokyo 100-8280 (JP); HARIYAMA, Tatsuo, Tokyo 100-8280 (JP); MARUNO, Kenji, Tokyo 100-8280 (JP); TOYOUCHI, Tetsuya, Tokyo 100-8280 (JP)
(74) Representative: Mewburn Ellis LLP
(86) International application number: PCT/JP2024/000223
(87) International publication number: WO 2024/257379

(57) **Abstract**

An operator is enabled to efficiently inspect a workpiece. An inspection assistance device includes a real data acquisition unit configured to acquire real data indicating a shape, a position, and an orientation of a workpiece placed in a real space, a conversion unit configured to calculate an inspection position on the workpiece in the real space by performing a conversion operation of superimposing design data indicating a design shape of the workpiece on the real data on an inspection position on the design data, a sensor position acquisition unit configured to acquire a position of a sensor that inspects the workpiece in the real space, and a display control unit configured to cause a display device to display a direction in which a difference between the inspection position on the workpiece in the real space and the position of the sensor falls within an allowable positional deviation range as a direction in which the sensor is to be moved.

## Description

### Technical Field

The present invention relates to an inspection assistance device and an inspection assistance method. The present invention claims priority to Japanese Patent Application No. 2023-096394 filed on June 12, 2023, and for designated countries where incorporation by reference to documents is permitted, the content described in the application is incorporated herein by reference.

### Background Art

There has been proposed a method of moving a sensor to a target position on a workpiece when a robot including a sensor for inspection automatically inspects the workpiece (Patent Literature 1).

### Citation List

### Patent Literature

Patent Literature 1: JP 2021-189003 A

### Summary of Invention

### Technical Problem

Meanwhile, in order to perform a more flexible inspection, an operator, not a robot, may manually inspect whether there is a defect in a workpiece such as a part by grasping a sensor. When a position of interest on a workpiece is measured by a sensor, the operator determines the position and direction of the sensor on the basis of experience, and thus appropriate measurement cannot be efficiently performed.

The technique described in Patent Literature 1 is a technique for guiding a robot to a target position on a workpiece, and cannot be applied to a case where a person manually performs an inspection.

The present invention has been made in view of such a situation, and an object thereof is to enable an operator to efficiently inspect a workpiece.

### Solution to Problem

The present application includes a plurality of means for solving at least a part of the above problems, but an example thereof is as follows.

In order to solve the above problem, an inspection assistance device according to one aspect of the present invention includes a real data acquisition unit configured to acquire real data indicating a shape, a position, and an orientation of a workpiece placed in a real space, a conversion unit configured to calculate an inspection position on the workpiece in the real space by performing a conversion operation of superimposing design data indicating a design shape of the workpiece on the real data on an inspection position on the design data, a sensor position acquisition unit configured to acquire a position of a sensor that inspects the workpiece in the real space, and a display control unit configured to cause a display device to display a direction in which a difference between the inspection position on the workpiece in the real space and the position of the sensor falls within an allowable positional deviation range as a direction in which the sensor is to be moved.

### Advantageous Effects of Invention

According to the present invention, an operator can efficiently inspect a workpiece.

Problems, configurations, and effects other than those described above will be clarified by the following description of embodiments.

### Brief Description of Drawings

Fig. 1 is a schematic diagram illustrating a configuration example of an inspection assistance system according to a first embodiment.
Fig. 2A is a schematic diagram illustrating an example of a defect detection sensor (part 1) according to the first embodiment.
Fig. 2B is a schematic diagram illustrating an example of the defect detection sensor (part 2) according to the first embodiment.
Fig. 2C is a schematic diagram illustrating an example of a film thickness or material measurement sensor according to the first embodiment.
Fig. 2D is a schematic diagram illustrating an example of an internal defect detection sensor according to the first embodiment.
Fig. 3 is a schematic diagram illustrating an example of a data structure of inspection condition information according to the first embodiment.
Fig. 4 is a schematic diagram illustrating an example of a data structure of inspection result information according to the first embodiment.
Fig. 5 is a schematic diagram illustrating an example of a conversion operation performed by a conversion unit according to the first embodiment.
Fig. 6A is a schematic diagram illustrating an example of a display mode (part 1) of a display device according to the first embodiment.
Fig. 6B is a schematic diagram illustrating an example of a display mode (part 2) of the display device according to the first embodiment.
Fig. 6C is a schematic diagram illustrating an example of a display mode (part 3) of the display device according to the first embodiment.
Fig. 6D is a schematic diagram illustrating an example of a display mode (part 4) of the display device according to the first embodiment.
Fig. 7 is a flowchart illustrating an example of processing performed by an inspection assistance device according to the first embodiment.
Fig. 8 is a flowchart illustrating an example of processing performed by the inspection assistance device according to the first embodiment.
Fig. 9 is a schematic diagram illustrating an example of a hardware configuration of the inspection assistance device according to first to third embodiments.

### Description of Embodiments

Hereinafter, embodiments of the present invention will be described with reference to the drawings. Examples describe the present invention, and are omitted and simplified as appropriate for clarity of description. The present invention can be implemented in various other forms. Unless otherwise specified, each component may be singular or plural.

Positions, sizes, shapes, ranges, and the like of components illustrated in the drawings may not represent actual positions, sizes, shapes, ranges, and the like in order to facilitate understanding of the invention. Therefore, the present invention is not necessarily limited to the positions, sizes, shapes, ranges, and the like disclosed in the drawings.

Examples of various types of information may be described in terms of expressions such as "table," "list," and "queue," but various types of information may be expressed in a data structure other than these. For example, various types of information such as "XX table," "XX list," and "XX queue" may be "XX information." In describing identification information, expressions such as "identification information," "identifier " "name," "ID," and "number" are used, but these can be replaced with each other.

In a case where there is a plurality of components having the same or similar functions, the same reference numerals may have different subscripts attached thereto in description. In addition, in a case where it is not necessary to distinguish the plurality of components, the description may be made by omitting the subscript.

In examples, processing performed by executing a program may be described. Here, a computer executes the program by a processor (for example, CPU or GPU), and performs processing defined by the program using a storage resource (for example, a memory), an interface device (for example, a communication port), and the like. Therefore, the subject of processing performed by executing the program may be a processor. Similarly, the subject of processing performed by executing the program may be a controller, a device, a system, a computer, or a node having a processor. The subject of processing performed by executing the program may be an arithmetic unit, and may include a dedicated circuit that performs specific processing. Here, the dedicated circuit is, for example, a field programmable gate array (FPGA), an application specific integrated circuit (ASIC), a complex programmable logic device (CPLD), or the like.

The program may be installed on a computer from a program source. The program source may be, for example, a program distribution server or a computer-readable storage medium. When the program source is a program distribution server, the program distribution server may include a processor and a storage resource that stores a distribution target program, and the processor of the program distribution server may distribute the distribution target program to another computer. In addition, in examples, two or more programs may be realized as one program, or one program may be realized as two or more programs.

### <First Embodiment>

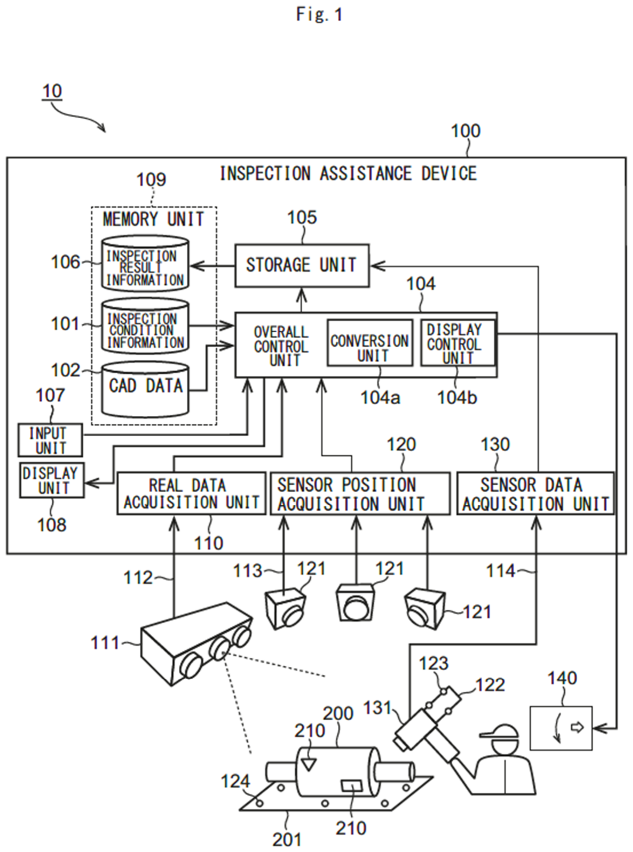

Fig. 1 is a schematic diagram illustrating a configuration example of an inspection assistance system according to the present embodiment. The inspection assistance system 10 is a system that assists an operator to manually inspect a workpiece 200 such as a part.

As an example, the inspection assistance system 10 includes an inspection assistance device 100, a 3D scanner 111, a position and orientation measurement sensor 121, a sensor 131, a display device 140, and a workpiece table 201.

The workpiece table 201 is a mounting table on which a workpiece 200 such as a part is mounted. In this example, a plurality of markers 124 are provided on the surface of the workpiece table 201. Further, an inspection position 210 is set on the workpiece 200 in advance, and an operator performs an inspection at the inspection position 210 using the sensor 131.

The 3D scanner 111 is three-dimensional measuring equipment that measures the shape, position, and orientation of the workpiece 200 in real space. The 3D scanner 111 identifies the position of each of the plurality of markers 124 to set, for example, a coordinate system having the surface of the workpiece table 201 as a coordinate plane. The coordinate system is hereinafter referred to as a stage coordinate system. Then, the 3D scanner 111 outputs real data 112 indicating the shape, position, and orientation of the workpiece 200 based on the stage coordinate system. By using three-dimensional measuring equipment such as the 3D scanner 111, it is possible to obtain the real data 112 indicating the shape, position, and orientation of the workpiece 200 in this manner.

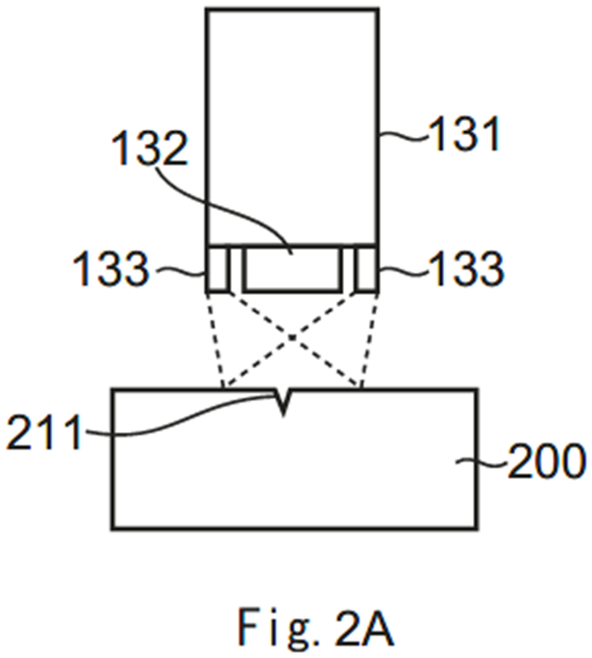

The sensor 131 is a device for inspecting the workpiece 200. Fig. 2A to Fig. 2D are schematic diagrams illustrating examples of the sensor 131 used in the present embodiment.

Fig. 2A is a schematic diagram illustrating an example of a defect detection sensor 131 based on an image. The defect detection sensor 131 acquires an image of the surface of the workpiece 200 with a camera lens 132 while illuminating the workpiece 200 with a plurality of illuminations 133. When there is a defect 211 such as a scratch or a crack on the workpiece, the defect 211 can be detected as a difference in brightness on an image.

In addition, by switching the illumination to be turned on among the plurality of illuminations 133, the irradiation direction of the illumination to the defect 211 is changed, and the image of the defect 211 is changed. In this example, when the right illumination 133 is turned on and the left illumination 133 is turned off, an image in which only the left side of the defect 211 is bright can be acquired. On the other hand, when the left illumination 133 is turned on and the right illumination 133 is turned off, an image in which only the right side of the defect 211 is bright can be acquired. The defect detection sensor 131 measures the position, unevenness, size, and the like of the defect 211 in this manner.

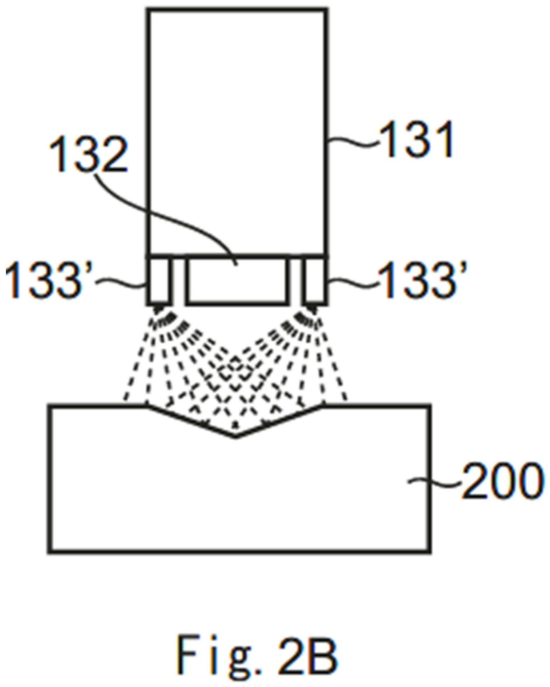

Fig. 2B is a schematic diagram of an example of a three-dimensional shape sensor in which the illuminations 133 of the defect detection sensor 131 based on an image (Fig. 2A) are changed to pattern illuminations 133'. The pattern illuminations 133' project a striped pattern on the workpiece 200 by laser light, a liquid crystal projector, or the like. The projected pattern is deformed by the unevenness of the surface of the workpiece 200. Using this, the three-dimensional shape sensor 131 images the projected pattern with the camera lens 132 and calculates the deformation amount of the pattern, thereby measuring the three-dimensional shape of the surface of the workpiece 200 on the basis of the principle of triangulation.

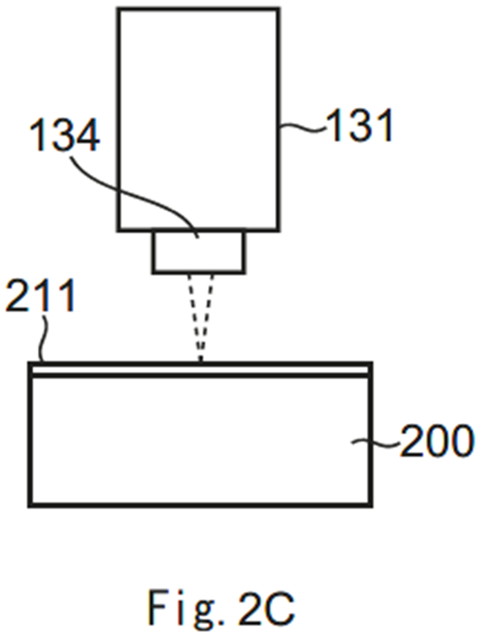

Fig. 2C is a schematic diagram illustrating an example of a film thickness or material measurement sensor 131 based on a reflection spectrum. The sensor 131 projects light from a spectroscope lens 134 onto a film 212 on the surface of the workpiece 200 and measures spectral characteristics of the reflected light. The spectral characteristics vary depending on the thickness and material of the film 212. As a result, the sensor 131 can measure and analyze the spectral characteristics to measure variations in the thickness and material of the film 212.

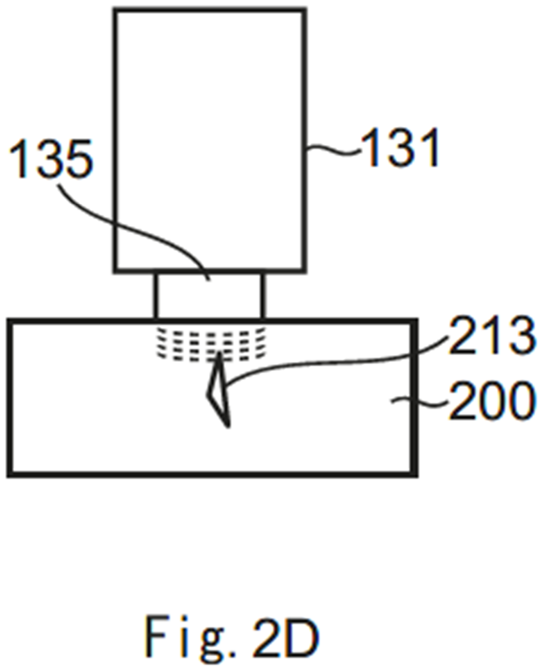

Fig. 2D is a schematic diagram of an example of an internal defect detection sensor 131 using ultrasonic waves. The internal defect detection sensor 131 includes an ultrasonic probe 135, and detects an internal defect 213 by analyzing a signal in which an ultrasonic wave oscillated by bringing the ultrasonic probe into contact with the workpiece 200 is reflected by the internal defect 213 and returned to the ultrasonic probe 135. The thickness of the workpiece 200 can also be detected by the internal defect detection sensor 131 on the same principle. Even when an eddy current is used instead of ultrasonic waves, the internal defect detection sensor 131 can detect the internal defect 213 and the thickness of the workpiece 200.

Fig. 1 is referred to again. An attachment 122 provided with a plurality of markers 123 is attached to the sensor 131.

The position and orientation measurement sensor 121 is a motion capture camera that recognizes the markers 123 on the attachment 122 to measure the position and orientation of the sensor 131 in a three-dimensional real space. By providing a plurality of position and orientation measurement sensors 121, it is possible to measure the three-dimensional positions of the markers 123 by stereo vision. Further, in the present embodiment, three or more markers 123 are provided on the attachment 122. As a result, the position and orientation measurement sensor 121 can measure the three-dimensional orientation and position of the sensor 131 attached to the attachment 122.

In addition, the position and orientation measurement sensor 121 recognizes the positions of the markers 124 on the workpiece table 201 to identify the above-described stage coordinate system having the surface of the workpiece table 201 as a coordinate plane. Then, the position and orientation measurement sensor 121 outputs sensor position and orientation data 113 indicating the position and orientation of the sensor 131 based on the stage coordinate system. The position of the sensor 131 is, for example, the position of the center of gravity of the sensor 131 in the stage coordinate system. In addition, the orientation of the sensor 131 is a direction in which the sensor 131 is directed. In a case where the sensor 131 has an optical system, the optical axis direction of the optical system is the direction in which the sensor 131 is directed. The direction may be a direction in which any of the three coordinate axes of a local coordinate system set on the sensor 131 is directed.

The position and orientation measurement sensor 121 is not limited to the motion capture camera, and other sensors may be adopted as the position and orientation measurement sensor 121. Examples of such a sensor include a sensor called a laser tracker. The sensor irradiates a retroreflective mirror (not illustrated) attached to the attachment 122 with laser light, and measures a direction and a distance of the mirror by a deviation of the reflected light and a reciprocating time of the laser light. In this case, the orientation of the sensor 131 can also be measured by recognizing the positions of the plurality of markers 123 with the camera. One laser tracker may be used instead of a plurality of laser trackers.

The inspection assistance device 100 is a computer such as a personal computer (PC) or a server, and is a device that assists an operator to inspect the workpiece 200 with the sensor 131. As an example, the inspection assistance device 100 includes an overall control unit 104, a storage unit 105, an input unit 107, a display unit 108, a memory unit 109, a real data acquisition unit 110, a sensor position acquisition unit 120, and a sensor data acquisition unit 130.

The memory unit 109 stores inspection condition information 101, computer aided design (CAD) data 102, and inspection result information 106.

The CAD data 102 is three-dimensional CAD data of the workpiece 200, and is an example of design data indicating a design shape of the workpiece 200. For example, data obtained by collecting position coordinates of each point on the surface of the workpiece 200 is the CAD data 102. Hereinafter, a coordinate system serving as a reference of position coordinates in the CAD data 102 is referred to as a workpiece coordinate system.

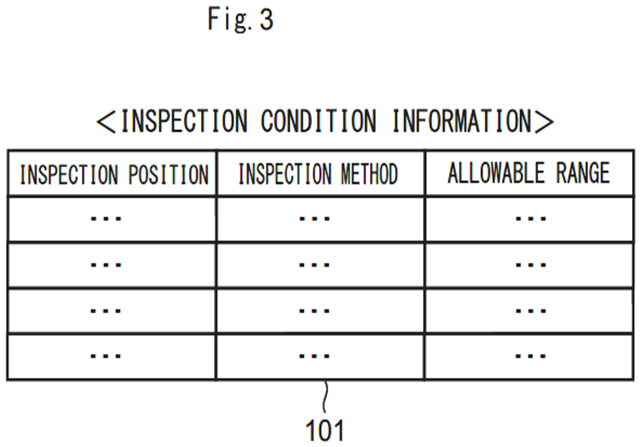

Fig. 3 is a schematic diagram illustrating an example of a data structure of the inspection condition information 101. The inspection condition information 101 is information in which an inspection position, an inspection method, and allowable ranges are associated.

The inspection position is position coordinates of an inspection position on the CAD data 102 adopting the above-described workpiece coordinate system, and is a position scheduled to be inspected in advance on the surface of the workpiece 200 indicated by the CAD data 102.

The inspection method includes the ID of the sensor 131 used for inspection with respect to the inspection position and an inspection direction (orientation) of the sensor 131 at the time of inspection. The inspection direction is set on the basis of the workpiece coordinate system.

The inspection direction is a direction (orientation) in which the sensor 131 is directed at the time of inspection, and is, for example, a direction in which a reference line of the sensor 131 extends. For example, in a case where the sensor 131 includes an optical system, the reference line of the sensor 131 is an optical axis of the optical system. The inspection direction is a normal direction at the inspection position of the workpiece 200 indicated by the CAD data 102. However, depending on the type of the sensor 131, a direction inclined from the normal direction may be the inspection direction.

The allowable ranges are an allowable positional deviation range, an allowable distance range, and an allowable angle range. The allowable positional deviation range is an allowable range of deviation amounts of an inspection position in the real space and the position of the sensor 131 in a case where the inspection position and the position of the sensor 131 are projected on a plane perpendicular to the reference line of the sensor 131. The allowable distance range is an allowable range of the distance between the inspection position and the position of the sensor 131 in the real space. The allowable angle range is an allowable range of an angle formed by the inspection direction and the direction in which the sensor 131 is actually facing in the real space.

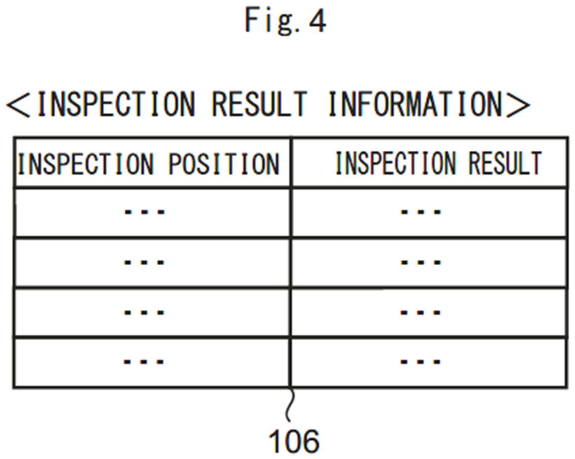

Fig. 4 is a schematic diagram illustrating an example of a data structure of the inspection result information 106. The inspection result information is information in which an inspection position on the CAD data 102 is associated with an inspection result at the inspection position. The inspection result is a result at an inspection position of inspection by the sensor 131. For example, sensor data 114 and information indicating the presence or absence of abnormality such as "with scratch" or "no scratch" are stored in the inspection result.

Fig. 1 is referred to again. The real data acquisition unit 110 acquires, from the 3D scanner 111, the real data 112 indicating the shape, position, and orientation of the workpiece 200 based on the stage coordinate system. In this example, the 3D scanner 111 performs transformation into the stage coordinate system, but the real data acquisition unit 110 may perform the transformation. In that case, the 3D scanner 111 outputs shape data indicating the shape of the workpiece 200 and position data indicating the positions of the markers 124 to the real data acquisition unit 110. Then, the real data acquisition unit 110 generates the real data 112 indicating the shape, the position, and the orientation of the workpiece 200 based on the stage coordinate system on the basis of the shape data and the position data.

The sensor position acquisition unit 120 acquires, from the position and orientation measurement sensor 121, sensor position and orientation data 113 indicating the position and orientation of the sensor 131 based on the stage coordinate system. In this example, the position and orientation measurement sensor 121 performs transformation into the stage coordinate system, but the sensor position acquisition unit 120 may perform the transformation. In that case, the position and orientation measurement sensor 121 outputs shape data indicating the shape of the sensor 131 and position data indicating the positions of the markers 123 to the sensor position acquisition unit 120. Then, the sensor position acquisition unit 120 generates sensor position and orientation data 113 indicating the position and orientation of the sensor 131 based on the stage coordinate system on the basis of the shape data and the position data.

The sensor data acquisition unit 130 acquires sensor data 114 indicating an inspection result of the sensor 131.

The overall control unit 104 has a function of controlling the entire inspection assistance device 100, and includes, for example, a conversion unit 104a and a display control unit 104b.

The converter unit 104a calculates an inspection position on the workpiece 200 in the real space by performing a conversion operation to superimpose the CAD data 102 on the real data 112 with respect to the inspection position in the inspection condition information 101. In addition, the conversion unit 104a performs the above-described conversion operation on the inspection direction included in the inspection method of the inspection condition information 101 to convert the inspection direction into an inspection direction on the workpiece 200 in the real space.

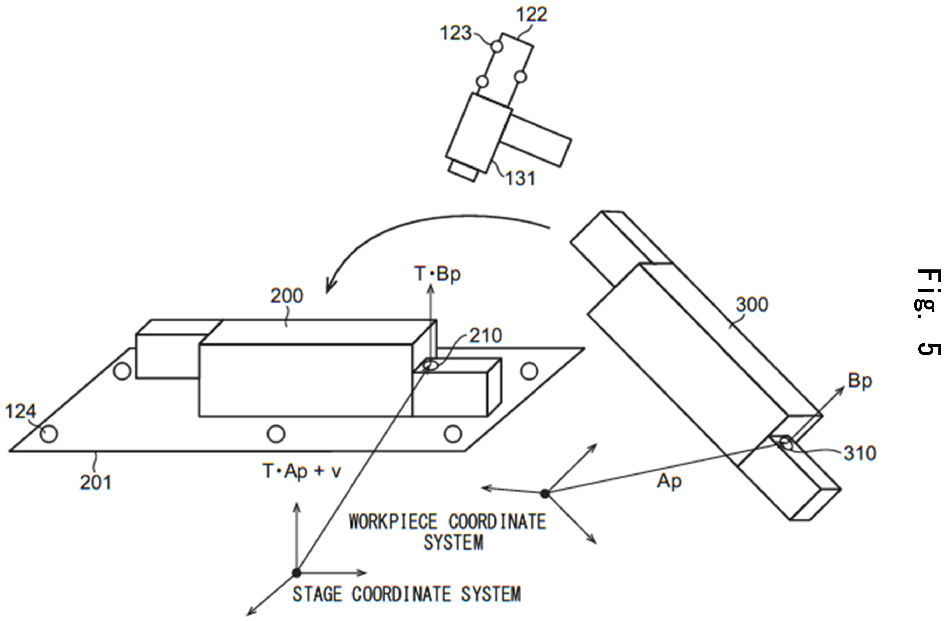

Fig. 5 is a schematic diagram illustrating an example of a conversion operation performed by the conversion unit 104a. In Fig. 5, a design workpiece 300 indicated by the CAD data 102 in the workpiece coordinate system is also illustrated together with the workpiece 200 in the stage coordinate system in the real space.

First, the conversion unit 104a acquires the real data 112 from the real data acquisition unit 110, and acquires the CAD data 102 from the memory unit 109.

Then, the conversion unit 104a identifies a conversion operation that causes the workpiece 300 represented by the CAD data 102 to be superimposed on the workpiece 200 represented by the real data 112. Such a conversion operation is an operation obtained by combining a rotation operation T for matching the directions of the coordinate axes of the workpiece coordinate system and the stage coordinate system with each other, and a translation operation v for translating the workpiece coordinate system and matching the origin thereof with the origin of the stage coordinate system. By performing such a conversion operation on the workpiece 300, the workpiece 300 can be superimposed on the workpiece 200.

Hereinafter, the matrix representing the rotation operation T is also referred to as a rotation matrix T. The vector representing the translation operation v is hereinafter also referred to as a translation vector v.

The positions, shapes, and orientations of the workpiece 300 and the workpiece 200 are indicated by the CAD data 102 and real data 112, respectively. Therefore, hereinafter, performing the conversion operation on the workpiece 300 is also referred to as performing the conversion operation on the CAD data 102. Superimposing the workpiece 300 on the workpiece 200 is also referred to as superimposing the CAD data 102 on the real data 112.

Among such conversion operations, the conversion unit 104a obtains a rotation operation T and a translation operation v constituting a conversion operation that minimizes a deviation between the CAD data 102 and real data 112 after conversion. As an algorithm for superimposing the CAD data 102 on the real data 112 in this manner, an iterative distance deviation minimization algorithm called Iterative Closest Point (ICP) may be used. As a result, it is possible to obtain a conversion operation that minimizes the difference between the real data 112 and the CAD data 102 after conversion.

The conversion unit 104a calculates the inspection position 210 on the workpiece 200 by performing the conversion operation obtained in this manner on an inspection position 310 on the workpiece 300. For example, when the position vector of the inspection position 310 in the workpiece coordinate system is Ap, the conversion unit 104a calculates the position vector of the inspection position 210 in the stage coordinate system by T·Ap+v.

Further, the conversion unit 104a converts an inspection direction Bp on the workpiece 300 into an inspection directions T·Bp on the workpiece 200 by the rotation operation T constituting the conversion operation described above.

The position vector Ap is stored in advance in the inspection condition information 101 (refer to Fig. 3) as an inspection position. The inspection direction Bp is stored in advance in the inspection method of the inspection condition information 101 as an inspection method. When the inspection direction Bp is not defined in the inspection method, the normal direction in the position vector Ap of the workpiece 300 may be used as the inspection direction Bp.

Through the above operation, the inspection assistance device 100 can identify the inspection position T·Ap+v and the inspection direction T·Bp on the workpiece 200 in the real space.

Fig. 1 is referred to again. The display control unit 104b displays, on the display device 140, a moving direction of the sensor 131 that reduces the positional deviation between the inspection position and the sensor 131, the deviation between the inspection direction and the orientation of the sensor 131, and the like.

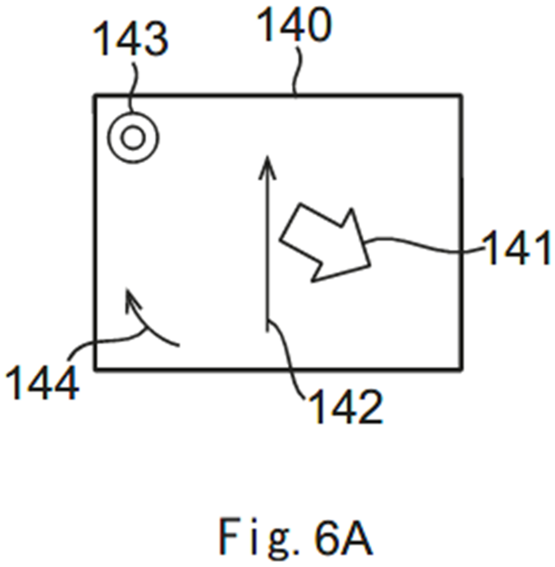

Fig. 6A to Fig. 6D are schematic diagrams illustrating examples of display modes of the display device 140.

Fig. 6A illustrates an example in which a tablet terminal is used as the display device 140. An image indicating a moving direction 141, a swing direction 142, and a rotation direction 144 of the sensor 131 is displayed on the display device 140. In this example, an arrow is displayed as the image.

In a case where the inspection position T·Ap+v on the workpiece 200 and the actual position of the sensor 131 are projected on the plane perpendicular to the direction in which the sensor 131 is directed, the moving method 141 is a direction in which the deviation amount between these positions falls within an allowable positional deviation range included in the "allowable range" of the inspection condition information 101.

By moving the sensor 131 in the movement direction 141, the operator can keep the positional deviation of the sensor 131 within the allowable positional deviation range without relying on their own experience.

The swing direction 142 is a direction in which an angle formed by the inspection direction T·Bp on the workpiece 200 and the direction in which the sensor 131 is actually directed among the directions in which the sensor 131 is swung in a state where one point of the sensor 131 is fixed falls within an allowable angle range included in the "allowable range" of the inspection condition information 101. In the example of Fig. 6A, "pan" is illustrated in which the sensor 131 is swung from bottom to top.

By changing the orientation of the sensor 131 in the swing direction 142, the operator can keep the deviation of the orientation of the sensor 131 within the allowable angle range without relying on their own experience.

The rotation direction 144 indicates a direction in which the sensor 131 is rotated with the reference line of the sensor 131 as a rotation axis. For example, the rotation direction 144 indicates a direction in which an angle between a direction perpendicular to the reference line of the sensor 131 and a reference direction (for example, a direction in a tangent plane of the workpiece 200 at the inspection position) set at the inspection position T·Ap+v on the workpiece 200 falls within an allowable range. The value of the allowable range is stored in, for example, the allowable range of the inspection condition information 101.

Further, a distance direction 143 is also displayed on the display device 140. The distance direction 143 indicates a direction in which the distance between the inspection position T·Ap+v on the workpiece 200 and the position of the sensor 131 falls within an allowable distance range included in the "allowable range" of the inspection condition information 101. The distance direction 143 has an inner circle and an outer circle. The inner circle indicates the allowable distance range included in the allowable range of the inspection condition information 101 (refer to Fig. 3), and the size thereof is fixed. On the other hand, the size of the outer circle changes depending on the distance between the inspection position T·Ap+v and the actual position of the sensor 131. When the distance falls within the allowable distance range, the outer circle falls within the inner circle. On the other hand, when the distance exceeds the allowable distance range, the outer circle becomes larger than the inner circle.

The operator can bring the sensor 131 close to or away from the workpiece 200 such that the outer circle in the distance direction 143 falls within the inner circle, thereby keeping the distance between the inspection position T·Ap+v and the actual position of the sensor 131 within the allowable distance range without relying on their own experience.

The display control unit 104b identifies deviations between the actual position and orientation of the sensor 131 indicated by the sensor position and orientation data 113 and the inspection position T·Ap+v and the inspection direction T·Bp on the workpiece 200, and displays each of the directions 141, 142, and 144 and the distance direction 143 depending on whether the deviations fall within the allowable position deviation range, the allowable distance range, and the allowable angle range.

In addition, the display control unit 104b may change the display mode of the display device 140 when the deviation falls within the allowable range. For example, when the difference between the inspection position and the actual position of the sensor 131 falls within the allowable positional deviation range, the arrows of the moving direction 141 and the rotation direction 144 may be deleted, or the arrows may be thinned. As a result, the operator does not need to move the sensor 131 any more, and can recognize that inspection may be started using the sensor 131.

Furthermore, the display control unit 104b may display the magnitudes of deviations according to the hues, densities, sizes, blinking speeds, and the like in the directions 141 to 144.

In addition, a small display may be adopted as the display device 140, and the small display may be attached to the attachment 122.

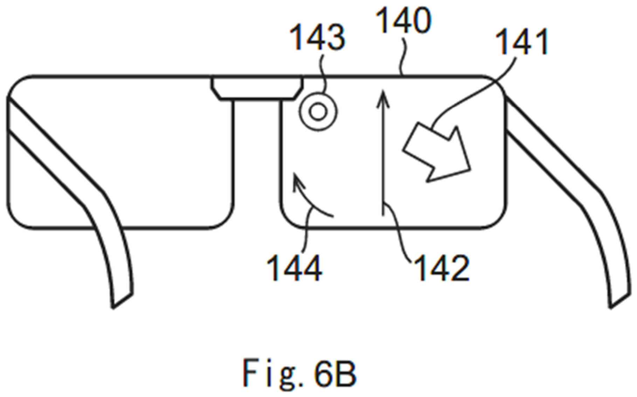

Fig. 6B illustrates an example in which a glasses-type display device (for example, smart glasses) is used as the display device 140. By using the glasses-type display device, the directions 141 to 144 are displayed in the field of view of the operator, and thus the operator can perform an operation efficiently.

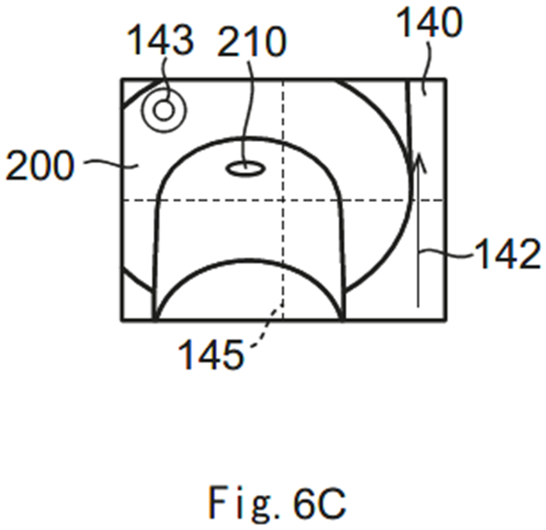

Fig. 6C illustrates an example in which a Computer Graphics (CG) image of the workpiece 200 is displayed on the display device 140. This CG image is an image of the workpiece 200 viewed from the sensor 131, and the inspection position 210 is also displayed in the CG image. For example, the display control unit 104b generates a CG image including the inspection position 210 on the basis of the CAD data 102 subjected to the conversion operation as illustrated in Fig. 5. The display control unit 104b may generate a CG image on the basis of the real data 112. Furthermore, the display control unit 104b identifies a relative positional relationship between the workpiece 200 and the sensor 131 in the real space on the basis of the sensor position and orientation data 113 and the real data 112, thereby generating a CG image viewed from the sensor 131. The display control unit 104b also displays a cross line 145 indicating the position of the sensor 131 on the display device 140. The deviation between the intersection of the cross line 145 and the inspection position 210 becomes a positional deviation. Therefore, in this example, it is possible to eliminate the need to display the moving direction 141 and the rotation direction 144 that indicate the positional deviation.

The swing direction 142 may be indicated by making each of the inner circle and the outer circle in the distance direction 143 elliptical with the swing direction 142 as a minor axis. In this case, each of the inner circle and the outer circle may be formed into a perfect circle when the angle formed by the inspection direction and the direction in which the sensor 131 is directed falls within the allowable angle range. This makes it unnecessary to display the swing direction 142.

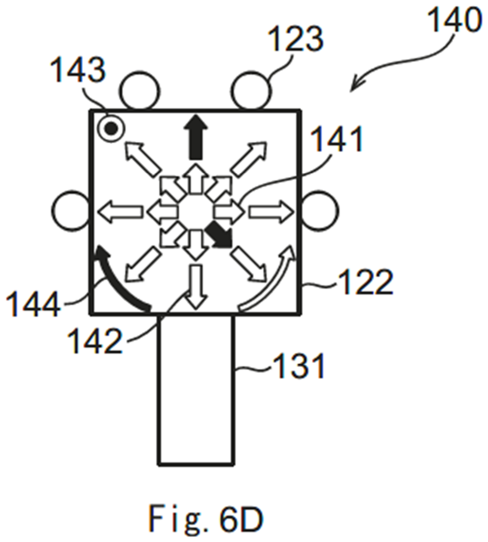

Fig. 6D illustrates an example in which a display such as a light emitting diode or a liquid crystal display is provided as the display device 140 on the attachment 122. In Fig. 6D, a black portion indicates a light emitting portion. In this way, by incorporating a light emission pattern of an arrow or a circle into the display device 140 in advance and causing the light emission pattern to emit light in a case where a deviation exceeds the allowable range, the operator can ascertain a direction in which the deviation falls within the allowable range. In addition, the magnitude of the deviation may be represented by the hue, density, size, blinking speed, and the like of the light emission pattern.

Fig. 1 is referred to again. The storage unit 105 generates the inspection result information 106 by associating the inspection position on the CAD data 102 with the inspection result at the inspection position, and stores the inspection result information 106 in the memory unit 109. For example, the storage unit 105 acquires the inspection position on the CAD data 102 via the conversion unit 104a, and acquires the sensor data 114 including the inspection result at the inspection position from the sensor data acquisition unit 130. Then, the storage unit 105 stores the inspection position and the inspection result in association with each other in the inspection result information 106. As a result, the operator can verify which position on the CAD data 102 has an abnormality later.

The input unit 107 is an input device such as a keyboard or a mouse through which the operator inputs various types of data to the inspection assistance device 100.

The display unit 108 is a display device such as a liquid crystal display that displays various types of data to the operator at the time of data input.

Next, processing performed by the inspection assistance device 100 according to the present embodiment will be described.

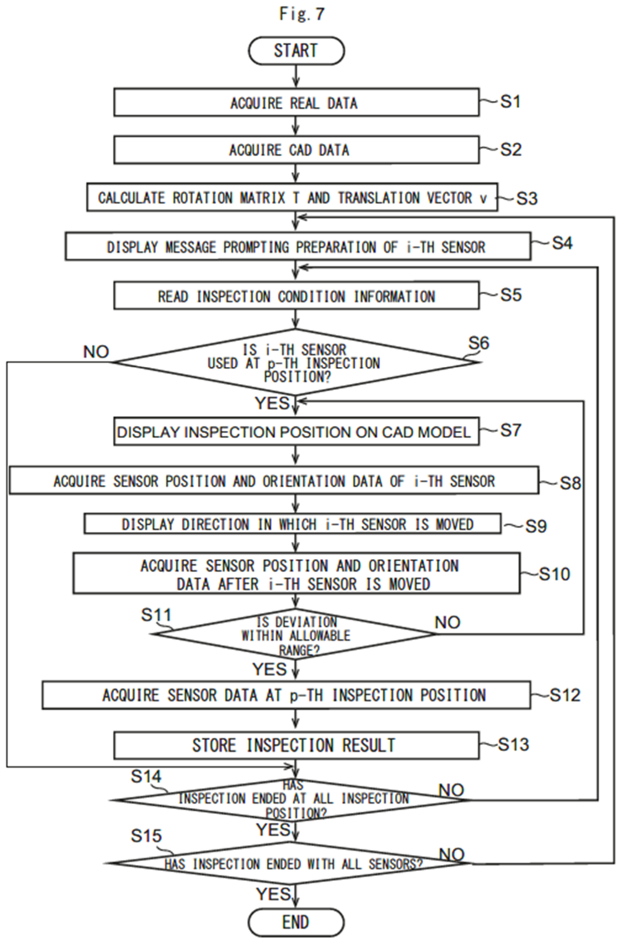

Fig. 7 is a flowchart illustrating an example of processing performed by the inspection assistance device 100 according to the present embodiment.

First, the real data acquisition unit 110 acquires, from the 3D scanner 111, the real data 112 indicating the shape, position, and orientation of the workpiece 200 based on the stage coordinate system (step S1).

For example, the 3D scanner 111 measures the shape of the workpiece 200 on the workpiece table 201 and then identifies the positions of the plurality of markers 124 on the workpiece table 201 to generate the real data 112. When the entire shape of the workpiece 200 cannot be measured by measurement in one direction, the 3D scanner 111 may measure the shape in a plurality of directions by moving the workpiece 200 by the operator.

Next, the conversion unit 104a acquires the CAD data 102 from the memory unit 109 (step S2).

Next, as illustrated in Fig. 5, the conversion unit 104a calculates the rotation matrix T and the translation vector v that realize the conversion operation of superimposing the CAD data 102 on the real data 112 (step S3).

Next, the display control unit 104b displays a message prompting preparation of an i-th sensor 131 on the display device 140 (step S4). In this example, there are a plurality of sensors 131 identified by IDs of integers i (=1,..., N), and when step S4 is performed for the first time, a message for preparing the sensor 131 with i=1 is displayed on the display device 140.

Based on this message, the operator performs an operation of turning on the sensor 131 and an operation of attaching the attachment 122 to the sensor 131. When the attachment 122 has already been provided in each of the plurality of sensors 131, the operation of attaching the attachment 122 is unnecessary. Further, the calibration operation for the sensor 131 may be performed depending on the type of the sensor 131.

Next, the overall control unit 104 reads the inspection condition information 101 from the memory unit 109 (step S5).

Next, the overall control unit 104 reads a p-th record from the top of the inspection condition information 101 and determines whether use of the i-th sensor is specified for the "inspection method" of the record (step S6). When step S6 is executed for the first time, the overall control unit 104 reads a record with p=1. Even when step S6 is not executed for the first time, the overall control unit 104 also reads the record with p=1 when switching to the next sensor 131 ("NO" in step S15). If YES is determined in step S6, processing proceeds to step S7, and if NO is determined, processing proceeds to step S14.

In step S7, the display control unit 104b displays a CG image of the workpiece 200 and the inspection position 210 on the display device 140 as illustrated in Fig. 6C. For example, the display control unit 104b displays, as the inspection position 210, a position T·Ap+v obtained by performing conversion of the rotation matrix T and the translation vector v on the inspection position Ap stored in the p-th record of the inspection condition information 101. As a result, the operator can bring the sensor 131 close to the inspection position 210. When the CG image is not displayed on the display device 140 as illustrated in Fig. 6A, Fig. 6B, and Fig. 6D, step S7 may be skipped.

Next, the sensor position acquisition unit 120 acquires the sensor position and orientation data 113 of the i-th sensor 131 from the position and orientation measurement sensor 121 (step S8).

Next, the display control unit 104b identifies deviations between the actual position and orientation of the sensor 131 indicated by the sensor position and orientation data 113 and the inspection position T·Ap+v and the inspection direction T·Bp on the workpiece 200. Then, the display control unit 104b displays the directions 141 to 144 on the display device 140 as illustrated in Fig. 6A to Fig. 6D according to whether the deviations fall within the allowable positional deviation range, the allowable distance range, and the allowable angle range (step S9). The inspection position Ap and the inspection direction Bp used in step S9 are the inspection position and the inspection direction in the workpiece coordinate system stored in the p-th record of the inspection condition information 101.

Next, the operator moves the sensor 131 according to the display, and the sensor position acquisition unit 120 acquires sensor position and orientation data 113 of the sensor 131 after movement (step S10). Then, the display control unit 104b determines whether the deviations are within the allowable range (step S11). Here, if NO is determined, processing returns to step S7.

On the other hand, if YES is determined, processing proceeds to step S12, and the operator executes inspection at the p-th inspection position using the i-th sensor 131, and the sensor data acquisition unit 130 acquires sensor data 114 indicating the inspection result.

Next, the storage unit 105 stores the p-th inspection position on the CAD data 102 and the inspection result at the inspection position in association with each other in the inspection result information 106 (step S13).

Next, the overall control unit 104 determines whether inspection at all the inspection positions has ended (step S14). For example, the overall control unit 104 determines whether the inspection at the inspection position of the last row in which p is maximum in the inspection condition information 101 has ended. Here, if NO is determined, p is incremented by 1, and processing returns to step S5.

On the other hand, if YES is determined in step S14, processing proceeds to step S15. In step S15, the overall control unit 104 determines whether inspection has been performed with all the first to N-th sensors 131 (step S15). For example, the overall control unit 104 determines that inspection has not been performed with all the sensors 131 (NO) if i<N, and determines that inspection has been performed with all the sensors 131 (YES) if i=N.

Here, if NO is determined, i is incremented by 1, and processing returns to step S4. On the other hand, if YES is determined, processing is terminated.

According to the present embodiment described above, in step S9, the display control unit 104b displays the directions 141 to 144 as illustrated in Fig. 6A to Fig. 6D on the display device 140. As a result, the operator moves the sensor 131 depending on the directions 141 to 144, and thus deviations of the position and orientation of the sensor 131 can be kept within the allowable range. As a result, the operator can determine the position and orientation of the sensor 131 without relying on their own experience, and can efficiently inspect the workpiece 200.

### <Second Embodiment>

In the first embodiment, the 3D scanner 111 measures the shape, position, and orientation of the workpiece 200 to generate the real data 112. On the other hand, in the present embodiment, the operator scans the three-dimensional shape sensor 131 described in Fig. 2B on the workpiece 200, and the sensor position acquisition unit 120 measures the shape, position, and orientation of the workpiece 200 at the time of scanning. Then, the inspection assistance device 100 generates the real data 112 on the basis of the sensor position and orientation data 113 generated by the sensor position acquisition unit 120. In this case, the markers 124 on the workpiece table 201 may be omitted.

Furthermore, as another example, a camera that images the workpiece 200 may be used as the sensor 131, and the real data 112 may be generated from an obtained image sequence by an algorithm called Structure from Motion (SFM) or visual Simultaneous Localization and Mapping (SLAM). In this case, the markers 124 are used to calibrate the magnification of a measurement result.

### <Third Embodiment>

In the first embodiment, the inspection position of the workpiece 200 is defined in advance in the inspection condition information 101 (refer to Fig. 3). On the other hand, in the present embodiment, a new inspection position is added in addition to the defined inspection position.

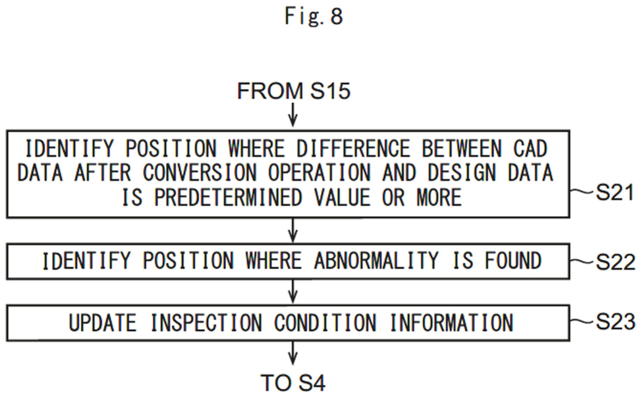

Fig. 8 is a flowchart illustrating an example of processing performed by the inspection assistance device 100 according to the present embodiment.

First, when YES is determined in step S15 of Fig. 7, the display control unit 104b identifies a position where the difference between the CAD data 102 subjected to the conversion T·Ap+v and the real data 112, that is, the difference in shape is a predetermined value or more, among positions on the CAD data 102 (step S21).

Next, the display control unit 104b identifies a position where an abnormality is detected in the inspection in step S12 among the positions on the CAD data 102 (step S22). For example, the display control unit 104b refers to the inspection result information 106 to identify a position where an abnormality is detected.

Next, the storage unit 105 updates the inspection condition information 101 by adding a record including the position identified in step S21 and step S22 as an inspection position to the inspection condition information 101 (step S23). The operator may appropriately set an inspection method and an allowable range in the newly added record. In addition, the overall control unit 104 may set an inspection method and an allowable range in the newly added record. For example, the overall control unit 104 may set a predetermined inspection method and allowable range according to the position and shape of the portion identified in step S21. Furthermore, the overall control unit 104 may set a predetermined inspection method and allowable range according to the position and shape of a place where an abnormality is present, the type of the abnormality, and the like. Furthermore, the overall control unit 104 may set a sensor 131 different from that at the time of the previous inspection as an inspection method with respect to an inspection position where an abnormality is detected.

Thereafter, processing returns to step S4. As a result, processing proceeds to step S12, and an additional inspection is performed. The sensors 131 to be used may be different for the additional inspection and the initial inspection performed before steps S22 and S23 are performed. For example, in the first inspection, "sensor A" is allocated as a sensor 131 with i=1, and "sensor B" is allocated as a sensor 131 with i=2. In the additional inspection, "sensor A" is allocated as a sensor 131 with i=3, and "sensor C" is allocated as a sensor 131 with i=4. Then, at the time of the first inspection, when i=2 is satisfied in step S15, it is determined as YES, and after i=3 is set, processing may return to step S4. Further, inspection may be performed with "sensor A" and "sensor C" on all the inspection positions by resetting p=1 after step S23 is ended, or processing may return to step S4 after resetting p to the value of p corresponding to the record added in step S23.

As described above, processing performed by the inspection assistance device 100 according to the present embodiment is terminated. In the above example, both step S21 and step S22 are executed, but only one of these steps may be executed. Furthermore, in this example, steps S21 and S22 are executed after step S15, but steps S21 and S22 may be executed at different timings.

According to the present embodiment described above, among the positions on the CAD data 102, a position where a difference from the real data 112 is a predetermined value or more or a position where an abnormality is found is newly set as an inspection position. Therefore, the operator can inspect what kind of abnormality is present at a newly set position by inspecting the newly set position with another sensor 131.

Next, a hardware configuration of the inspection assistance device 100 according to the first to third embodiments will be described.

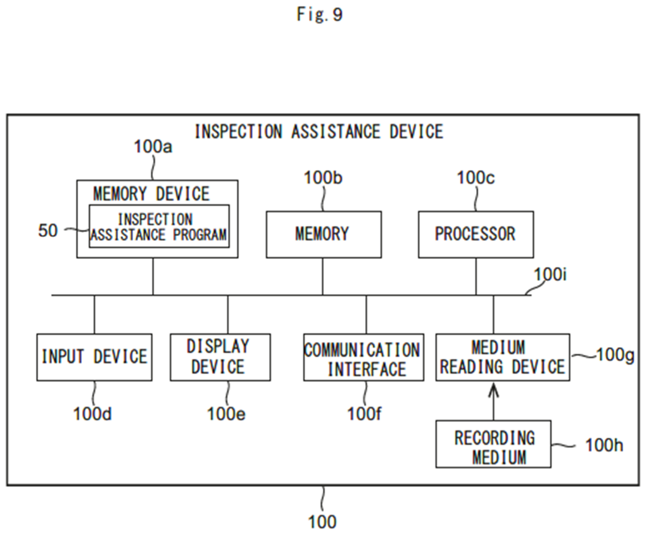

Fig. 9 is a schematic diagram illustrating an example of a hardware configuration of the inspection assistance device 100 according to the first to third embodiments.

As illustrated in Fig. 9, the inspection assistance device 100 includes a memory device 100a, a memory 100b, a processor 100c, an input device 100d, a display device 100e, a communication interface 100f, and a medium reading device 100g. These units are connected to each other by a bus 100i.

The memory device 100a is a nonvolatile storage memory such as a hard disk drive (HDD) or a solid state drive (SSD), and stores an inspection assistance program 50 according to the first to third embodiments.

The inspection assistance program 50 may be recorded in a computer-readable recording medium 100h, and the processor 100c may read the inspection assistance program 50 of the recording medium 100h.

Examples of the recording medium 100h include physical portable recording media such as a compact disc-read only memory (CD-ROM), a digital versatile disc (DVD), and a universal serial bus (USB) memory. A semiconductor memory such as a flash memory or a hard disk drive may be used as the recording medium 100h.

The inspection assistance program 50 may be stored in a device connected to a public line, the Internet, a local area network (LAN), or the like. In this case, the processor 100c may read and execute the inspection assistance program 50.

The memory 100b is hardware that temporarily stores data, such as a dynamic random access memory (DRAM), and the inspection assistance program 50 is developed thereon.

The processor 100c is a central processing unit (CPU) or a graphical processing unit (GPU) that controls each unit of the inspection assistance device 100. The processor 100c executes the inspection assistance program 50 in cooperation with the memory 100b, thereby implementing the overall control unit 104, the storage unit 105, the real data acquisition unit 110, the sensor position acquisition unit 120, and the sensor data acquisition unit 130 in Fig. 1.

The memory unit 109 in Fig. 1 is realized by the memory device 100a and the memory 100b.

The input device 100d is an input device such as a keyboard and a mouse for realizing the input unit 107 in Fig. 1.

The display device 100e is a display device such as a liquid crystal display for realizing the display unit 108 in Fig. 1.

The communication interface 100f is hardware such as a network interface card (NIC) for connecting the inspection assistance device 100 to a network such as the Internet or a LAN. The real data acquisition unit 110, the sensor position acquisition unit 120, and the sensor data acquisition unit 130 in Fig. 1 acquire the real data 112, the sensor position and orientation data 113, and the sensor data 114 via the communication interface 100f.

The medium reading device 100g is hardware such as a USB reader for reading data recorded on the recording medium 100h.

The effects described in the present specification are merely examples and are not limited, and other effects may be provided.

The present invention is not limited to the above-described embodiment, and includes various modifications. For example, each of the above-described embodiments has been described in detail in order to describe the present invention in an easily understandable manner, and the present invention is not necessarily limited to one including all the components described above. Further, a part of the configuration of one embodiment can be replaced with the configuration of another embodiment, and the configuration of another embodiment can be added to the configuration of one embodiment. In addition, it is possible to add, delete, and replace other configurations for a part of the configuration of each embodiment.

In addition, some or all of the above-described configurations, functions, processing units, processing means, and the like may be realized by hardware, for example, by designing with an integrated circuit. In addition, each of the above-described configurations, functions, and the like may be realized by software by a processor interpreting and executing a program for realizing each function. Information such as a program, a determination table, and a file for realizing each function can be stored in a memory device such as a memory, an HDD, and an SSD, or a recording medium such as an integrated circuit (IC) card, a secure digital (SD) card, and a digital versatile disc (DVD). In addition, control lines and information lines indicate what is considered to be necessary for the description, and do not necessarily indicate all the control lines and the information lines on the product. In practice, it may be considered that almost all the components are connected to each other.

### Reference Signs List

10 Inspection assistance system
50 Inspection assistance program
100 Inspection assistance device
100a Memory device
100b Memory
100c Processor
100d Input device
100e Display device
100f Communication interface
100g Medium reading device
100h Recording medium
100i Bus
101 Inspection condition information
102 CAD data
104 Overall control unit
104a Conversion unit
104b Display control unit
105 Storage unit
106 Inspection result information
107 Input unit
108 Display unit
109 Memory unit
110 Real data acquisition unit
111 3D Scanner
112 Real data
113 Sensor position and orientation data
114 Sensor data
120 Sensor position acquisition unit
121 Position and orientation measurement sensor
122 Attachment
123, 124 Marker
130 Sensor data acquisition unit
131 Sensor
132 Camera lens
133 Illumination
133' Pattern illumination
134 Spectroscopic lens
135 Ultrasonic probe
140 Display device
141 Moving direction
142 Swing direction
143 Distance direction
144 Rotation direction
145 Cross line
200, 300 Workpiece
201 Workpiece table
210, 310 Inspection position
211 Defect
212 Film
213 Internal defect

## Claims

1. An inspection assistance device comprising:
a real data acquisition unit configured to acquire real data indicating a shape, a position, and an orientation of a workpiece placed in a real space;
a conversion unit configured to calculate an inspection position on the workpiece in the real space by performing a conversion operation of superimposing design data indicating a design shape of the workpiece on the real data on an inspection position on the design data;
a sensor position acquisition unit configured to acquire a position of a sensor that inspects the workpiece in the real space; and
a display control unit configured to cause a display device to display a direction in which a difference between the inspection position on the workpiece in the real space and the position of the sensor falls within an allowable positional deviation range as a direction in which the sensor is to be moved.

2. The inspection assistance device according to claim 1, wherein
the conversion unit converts an inspection direction on the design data into an inspection direction on the workpiece in the real space by the conversion operation, and
the sensor position acquisition unit acquires a direction in which the sensor is directed, and
the display control unit causes the display device to display, as a direction in which the sensor is swung, a direction in which an angle formed by the inspection direction on the workpiece in the real space and the direction in which the sensor is directed falls within an allowable angle range.

3. The inspection assistance device according to claim 1, further comprising
a storage unit configured to store the inspection position on the design data and an inspection result at the inspection position in association with each other in a memory unit.

4. The inspection assistance device according to claim 1, wherein
the real data acquisition unit acquires the real data from three-dimensional measuring equipment that measures the shape, the position, and the orientation of the workpiece in the real space.

5. The inspection assistance device according to claim 1, wherein
the conversion unit performs a rotation operation and a translation operation on the design data as the conversion operation, and performs the conversion operation on the inspection position such that a deviation between the converted design data and the real data is minimized.

6. The inspection assistance device according to claim 1, wherein
the sensor is any of a defect detection sensor based on an image, a film thickness or material measurement sensor based on a reflection spectrum, and an internal defect detection sensor based on ultrasonic waves or an eddy current.

7. The inspection assistance device according to claim 1, wherein
the display control unit causes the display device to display a direction in which a distance between the inspection position on the workpiece in the real space and the position of the sensor falls within an allowable distance range as a direction in which the sensor is brought closer to or away from the inspection position.

8. The inspection assistance device according to claim 1, wherein
the display control unit changes a display mode of the display device when the difference between the inspection position on the workpiece in the real space and the position of the sensor falls within the allowable positional deviation range.

9. The inspection assistance device according to claim 1, wherein
the display control unit sets, as the inspection position on the design data, a position at which a difference between the design data on which the conversion operation has been performed and the real data is a predetermined value or more among positions on the design data.

10. The inspection assistance device according to claim 1, wherein
the display control unit sets, as the inspection position on the design data, a position where an abnormality is found by the sensor among the positions on the design data.

11. An inspection assistance method in which a computer executes:
a step of acquiring real data indicating a shape, a position, and an orientation of a workpiece placed in a real space;
a step of calculating an inspection position on the workpiece in the real space by performing a conversion operation of superimposing design data indicating a design shape of the workpiece on the real data on an inspection position on the design data;
a step of acquiring a position of a sensor that inspects the workpiece in the real space; and
a step of causing a display device to display a direction in which a difference between the inspection position on the workpiece in the real space and the position of the sensor falls within an allowable positional deviation range as a direction in which the sensor is to be moved.

12. The inspection assistance method according to claim 11, wherein
the computer further executes:
a step of converting an inspection direction on the design data into an inspection direction on the workpiece in the real space by the conversion operation;
a step of obtaining a direction in which the sensor is directed;
a step of causing the display device to display, as a direction in which the sensor is swung, a direction in which an angle formed by the inspection direction on the workpiece in the real space and the direction in which the sensor is directed falls within an allowable angle range.

13. The inspection assistance method according to claim 11, wherein
the computer further executes
a step of storing the inspection position on the design data and an inspection result at the inspection position in a memory unit in association with each other.

14. The inspection assistance method according to claim 11, wherein
the computer acquires the real data from a three-dimensional measuring equipment that measures the shape, the position, and the orientation of the workpiece in the real space.

15. The inspection assistance method according to claim 11, wherein
the computer performs a rotation operation and a translation operation on the design data as the conversion operation, and performs the conversion operation on the inspection position such that a deviation between the converted design data and the real data is minimized.
